# EUROPÄISCHE PATENTANMELDUNG

(11) **EP 1 304 558 A1**
(43) Veröffentlichungstag der Anmeldung: **23.04.2003**
(21) Anmeldenummer: 02022386.3
(22) Anmeldetag: 09.10.2002
(51) Int. Cl.: G01N 17/00

(54) **Verfahren zur Bewitterung einer Probe und Bewitterungssystem**

(30) Priorität: 22.10.2001 DE 10152003
(71) Anmelder: Bayer Aktiengesellschaft, 51368 Leverkusen (DE)
(72) Erfinder: Sarabi, Bahman, Dr., 47803 Krefeld (DE)

(57) **Zusammenfassung**

Die Erfindung betrifft ein Verfahren und ein Bewitterungssystem zur Bewitterung einer Probe über einen Zeitraum mit:
- Mitteln 100 zur Bewitterung der Probe über eine Anzahl von Zeitintervallen des Zeitraums,
- Mitteln 102 zur Bestimmung der Farbkoordinaten der Probe, jeweils nach einem Zeitintervall,
- Mitteln 103 zur Speicherung der Farbkoordinaten und/oder Mitteln zur Herstellung eines Farbbildes der Probe nach jedem Zeitintervall.

## Beschreibung

Die Erfindung betrifft ein Verfahren zur Bewitterung einer Probe über einen Zeitraum und ein Bewitterungssystem.

Aus dem Stand der Technik sind verschiedene Bewitterungsvorrichtungen und Verfahren bekannt. Beispielsweise zeigen die DE 42 36 897 A1, GM 89 06 975.7 und die DE 195 26 368 A1 verschiedene Bewitterungsgeräte und Verfahren für die zeitraffende Bewitterung von Werkstoffproben.

Bewitterungsversuche werden im Allgemeinen durchgeführt, um die Veränderung eines bestimmten Werkstoffs über eine Zeitdauer, während derer der Werkstoff bestimmten Umweltbedingungen ausgesetzt ist, festzustellen. Dabei ist auch der zeitliche Verlauf der Veränderung des Werkstoffs während des beobachteten Zeitraums von Interesse. Hierzu wird ein solcher Zeitraum in Teilintervalle aufgeteilt und für jedes Teilintervall eine Probe oder eine Probencharge vorgesehen.

Nach Ablauf eines solchen Zeitintervalls wird die dem Zeitintervall zugeordnete Probe oder Probencharge den Bewitterungsgerät entnommen und dann ausgewertet und/oder archiviert.

Für einen längeren Bewitterungszeitraum, der in verschiedene Zeitintervalle unterteilt ist, ist dies mit einem entsprechenden Aufwand verbunden, da für jedes Zeitintervall eine extra Probe bzw. Probencharge vorgesehen sein muss.

Der Erfindung liegt daher die Aufgabe zugrunde, ein verbessertes Verfahren zur Bewitterung einer Probe über einen Zeitraum sowie ein verbessertes Bewitterungssystem zu schaffen. Die der Erfindung zugrunde liegende Aufgabe wird mit den Merkmalen der unabhängigen Ansprüche jeweils gelöst. Bevorzugte Ausführungsformen der Erfindung sind in den abhängigen Ansprüche angegeben.

Die Erfindung erlaubt es, einen Bewitterungsversuch über einen beliebigen Zeitraum mit nur einer Probe oder nur einer Probencharge durchzuführen. Die Probe bzw. die Probencharge wird dazu dem Bewitterungsgerät nach bestimmten Zeitintervallen entnommen. Von einer Probe werden dann die Farbkoordinaten mittels eines Systems zur Bestimmung der Farbkoordinaten ermittelt. Diese Farbkoordinaten können dann zu Dokumentationszwecken abgespeichert werden. Alternativ oder zusätzlich kann auch basierend auf diesen Farbkoordinaten ein Farbbild der Probe hergestellt werden. Danach wird die Probe bzw. die Probencharge wieder dem Bewitterungsgerät zugeführt, um die Bewitterung über das nachfolgende Zeitintervall fortzusetzen.

Nach einer bevorzugten Ausführungsform der Erfindung wird ein Farbkatalogsystem für die Bestimmung der Farbkoordinaten einer Probe verwendet. Ein solches Farbkatalogsystem basiert auf der Verwendung von Farbvorlagen als Vergleichsnormal für die exakte Bestimmung einer Farbe, das heißt, der Bestimmung der Farbkoordinaten der Farbe in einem diskreten Farbraum. Dazu wird ein interessierender Farbraum mittels eines Farb-Koordinatensystems zunächst in einen Anzahl diskreter Farben unterteilt und für jede der diskreten Farben eine Farbvorlage hergestellt.

Die Herstellung einer solchen Farbvorlage kann mittels eines Piktographen erfolgen. Bei einem Piktographen handelt es sich um ein Gerät zur Herstellung eines digitalen Farbbildes, welches mittels Laserstrahlen auf einer Spezialfolie erzeugt wird. Solche Piktographen sind kommerziell z. B. erhältlich von Fuji Photo Film Co., Ltd., Japan, insbesondere das Gerät Digital Image Printer Pictrography 4000.

Nach einer bevorzugten Ausführungsform der Erfindung werden die verschiedenen Farbvorlagen in einem Katalog zusammengefasst. Ein solcher Katalog hat einen Index, der den jeweiligen Farbkoordinaten der Farbvorlagen entspricht, das heißt, auf jede der Farbvorlagen kann mittels der entsprechenden Farbkoordinaten unmittelbar in dem Katalog zugegriffen werden. Vorzugsweise beinhaltet jede Seite des Katalogs einen zweidimensionalen Ausschnitt aus z.B. einem vierdimensionalen Farbraum, insbesondere CMYK Farbraum, mit den Farbvorlagen, die zu diesem Ausschnitt dazugehören. Einen solchen zweidimensionalen Ausschnitt erhält man beispielsweise indem zwei Koordinaten festgelegt werden und die beiden anderen Koordinaten als Parameter dienen.

Nach einer bevorzugten Ausführungsform der Erfindung wird zur Bestimmung der Farbkoordinaten einer Probe zunächst eine Farbmessung mit einem Farbmessgerät durchgeführt. Mittels der so gewonnenen Farbkoordinaten wird auf die entsprechende Vorlage mit derselben Farbkoordinate in dem Farbkatalog zugegriffen. Vorzugsweise geht die Genauigkeit des Farbkatalogs über die Genauigkeit der Farbmessung wesentlich hinaus, das heißt, die Anzahl der diskreten Farben des Farbkatalogs ist wesentlich höher als die Anzahl der Farben zwischen denen das Farbmessgerät unterscheiden kann. Die durch die Farbmessung gewonnenen Farbkoordinaten sind daher zunächst nur vorläufig und dienen als Ausgangspunkt für eine Feinabstimmung mit den Farben des Farbkatalogs.

Aus dem Stand der Technik sind zwar verschiedene Vorrichtungen zur Farbmessung und zur Bestimmung von Farbkoordinaten bekannt. Diese erfüllen jedoch nicht die Genauigkeitsanforderungen an eine exakte Bestimmung bzw. Reproduktion der Farbe einer Probe für die Zwecke eines Bewitterungsversuchs.

Aus der DE 196 44 616 A1 ist eine Farbmessvorrichtung bekannt, welche eine Lichtquelle und ein Fotoelement zum Empfang der von der Oberfläche der Probe diffus reflektierten Strahlung aufweist.

Aus der DE 196 44 617 A1 ist ein weiteres Verfahren und eine Vorrichtung zur Farbmessung bekannt. Dieses Verfahren dient zur Messung der Farbe einer in einem Behälter befindlichen Probe von körnigem oder granuliertem Gut durch Erfassung der Remission eines von dem Messkopf des Farbmessgeräts auf die Oberfläche der Probe ausgesandten Mess-Strahls.

Aus US-A 5 526 285, JP-A 0 90 333 49, JP-A 0 72 982 8 1, FR-A 27 08 105 sind verschiedene weitere Verfahren und Vorrichtungen zur Farbbestimmung bekannt. Farbmessvorrichtungen sind kommerziell z. B. von der Firma Dr. Bruno Lange GmbH, Königsweg 10, 14163 Berlin (www.drlange.de) 1 erhältlich.

Solche vorbekannten Farbmessvorrichtungen haben den Nachteil, dass die Genauigkeit der Farbmessung bei weitem nicht an die Genauigkeit heranreicht, mit der ein Betrachter verschieden Farbnuancen voneinander unterscheiden kann. Dies ist darauf zurückzuführen, dass das menschliche Auge zwischen einer wesentlich höheren Anzahl von verschiedenen Farben unterscheiden kann als die besten verfügbaren Farbmessvorrichtungen.

Die mangelnde Genauigkeit von aus dem Stand der Technik bekannten Farbmessvorrichtungen und Verfahren wird erfindungsgemäß für die Zwecke der Dokumentierung des Zustands einer bewitterten Probe dadurch gelöst, dass ein Farbkatalog zum Einsatz kommt, welcher für die Feinabstimmung der Farbkoordinaten nach einer vorläufigen Bestimmung der Farbkoordinaten mittels eines Farbmessgeräts dient.

In einer bevorzugten Ausführungsform der Erfindung geht der Benutzer mit den durch die Farbmessung gewonnenen Farbkoordinaten auf die entsprechende Katalogseite, die die Farbvorlage mit den Farbkoordinaten beinhaltet. Der Benutzer vergleicht dann die Probe mit dieser Farbvorlage und vorzugsweise auch mit weiteren Farbvorlagen auf derselben Katalogseite, die zu der erstgenannten Farbvorlage benachbart sind. Vorzugsweise findet dieser Vergleich unter Normbedingungen, das heißt, unter Normlicht vorzugsweise nach ISO 3664 statt.

In einer weiteren bevorzugten Ausführungsform der Erfindung weisen die Farbvorlagen jeweils ein Loch in einem mittleren Bereich auf. Für einen genauen Farbvergleich legt der Benutzer die Probe unter die betreffende Farbvorlage und hat somit einen unmittelbaren Vergleich zwischen der Farbe der Probenoberfläche und der Farbe der Farbvorlage. Aufgrund des visuellen Vergleichs unter Normbedingungen mit der Farbvorlage der messtechnisch ermittelten Farbkoordinaten der Probe und den hierzu benachbarten Farbvorlagen mit Farbkoordinaten in einer Umgebung der messtechnisch erfassten Farbkoordinaten ermittelt der Benutzer dann endgültig die Farbkoordinaten der Probe, die aufgrund der höheren Farbauflösung des Farbkatalogs im Vergleich zu dem Farbmessgerät von den messtechnisch bestimmten Farbkoordinaten abweichen können.

Die Bestimmung der vorläufigen Farbkoordinaten mittels des Farbmessgeräts ist insofern besonders vorteilhaft, als dem Benutzer auf diese Art und Weise ein Ausgangspunkt für die Vornahme des visuellen Vergleichs der Farbvorlagen des Katalogs mit der Probe gegeben wird. Ohne einen solchen Ausgangspunkt müsste der Benutzer in einem äußerst umfangreichen Farbkatalog zunächst die am besten passende Katalogseite finden, was praktisch kaum durchführbar ist. Durch die Messung der Farbkoordinaten mit einer Farbmessvorrichtung kann der Benutzer über den Index des Katalogs unmittelbar auf die relevante Katalogseite zugreifen, um von dort ausgehend Farbvergleiche mit Farbvorlagen benachbarter Farbkoordinaten auf derselben oder benachbarten Katalogseiten durchzuführen.

In einer weiteren bevorzugten Ausführungsform der Erfindung werden die so ermittelten Farbkoordinaten in ein digitales Gerät zur Herstellung eines Farbbildes eingegeben, beispielsweise in einen Piktograph. Mittels des Piktographen kann dann eine exakte Reproduktion der Farbe der Oberfläche der Probe hergestellt werden.

In einer weiteren bevorzugten Ausführungsform der Erfindung folgt die Messung der Farbkoordinaten mit der Farbmessvorrichtung ein einem dreidimensionalem Farb-Koordinatensystem. Die in dem dreidimensionalem Farb-Koordinatensystem ermittelten Farbkoordinaten werden dann in ein vierdimensionales Farb-Koordinatensystem transformiert. Entsprechende Verfahren zur Transformierung von Farbkoordinaten zwischen verschiedenen Farb-Koordinatensystemen sind an sich z.B. aus US-A 6 108 442 und US-A 6 137 596 bekannt.

Nach einer weiteren bevorzugten Ausführungsform der Erfindung wird ferner Luminanz-Bildinformation der Probe ermittelt, beispielsweise durch Aufnahme eines schwarz-weiß Bildes der Probe oder mittels eines Fein-Scanners, der ein LCH Bildsignal liefert. Aus dem LCH Bildsignal wird dann die L-Komponente, das heißt, die Luminanz-Komponente, extrahiert und mit den zuvor ermittelten Farbkoordinaten in einem Bildverarbeitungsprogramm zu einer resultierenden Bildinformation kombiniert. Die C-Komponente eines LCH Bildsignals gibt die Chrominanz an und die H-Komponente den Farbwinkel auf einem 360 Grad Farbkreis.

Als Bildverarbeitungsprogramm kann dabei z. B. das Programm Adobe Photoshop verwendet werden, welches aus einem schwarz-weiß Bild und zusätzlicher Farbinformationen in Form von Farbkoordinaten ein resultierendes Gesamtbild erzeugt. Diese resultierende Bildinformation kann wiederum für die Herstellung eines digitalen Farbbildes mittels eine Piktographen verwendet werden.

Dabei ist von besonderem Vorteil, dass sich neben der Farbinformation durch die Aufnahme der Luminanz-Information auch Oberflächenstrukturen, Texturen sowie Oberflächenglanz in der resultierenden Bildinformation bzw. in dem digitalen Farbbilde wiedergeben lassen.

Beispielsweise lassen sich auf diese Art und Weise genaue digitale Farbbilder von bewitterten Proben herstellen. Typischerweise werden Bewitterungsversuche so ausgeführt, dass verschiedene Proben für verschiedene Zeiträume Bewitterungen ausgesetzt sind, um den zeitlichen Verlauf des Bewitterungseinflusses zu ermitteln. Hierfür ist im Stand der Technik erforderlich für jeden Bewitterungszeitraum eine eigene Probe vorzusehen.

Die Erfindung ermöglicht es hingegen, mit nur einer Probe für den gesamten Bewitterungszeitraum auszukommen, indem die Probe innerhalb vorgegebener Abstände der Bewitterungsvorrichtung entnommen wird, um ein digitales Farbbild nach dem erfindungsgemäßen Verfahren herzustellen und die Probe dann in das Bewitterungsgerät zurückzugeben. Auf diese Art und Weise lässt sich der zeitliche Verlauf des Bewitterungseinflusses festhalten, ohne für jedes Zeitintervall eine Extraprobe oder Probencharge vorsehen zu müssen.

Im Weiteren werden bevorzugte Ausführungsformen der Erfindung mit Bezugnahme auf die Zeichnungen näher erläutert. Es zeigen:
- Fig. 1: ein Blockdiagramm einer Ausführungsform eines erfindungsgemäßen Bewitterungssystems,
- Fig. 2: ein Flussdiagramm einer Ausführungsform eines erfindungsgemäßen Verfahrens zur Bewitterung einer Probe über einen Zeitraum,
- Fig. 3: ein schematisches Blockdiagramm eines Systems zur Bestimmung der Farbkoordinaten einer Probe und zur Herstellung eines Farbbildes der Probe,
- Fig. 4: ein Flussdiagramm zur Veranschaulichung der Herstellung eines Farbkatalogs,
- Fig. 5: eine schematische Darstellung von zwei verschiedenen Seiten des Farbkatalogs,
- Fig. 6: eine Seite des Farbkatalogs mit Löchern in den Farbvorlagen für einen erleichterten visuellen Vergleich,
- Fig. 7: ein Flussdiagramm einer ersten Ausführungsform eines erfindungsgemäßen Verfahrens für die Bestimmung der Farbkoordinaten,
- Fig. 8: ein Flussdiagramm einer zweiten Ausführungsform des erfindungsgemäßen Verfahrens zur Bestimmung der Farbkoordinaten,
- Fig. 9: ein Flussdiagramm einer Ausführungsform eines erfindungsgemäßen Verfahrens zur Herstellung eines digitalen Farbbildes.

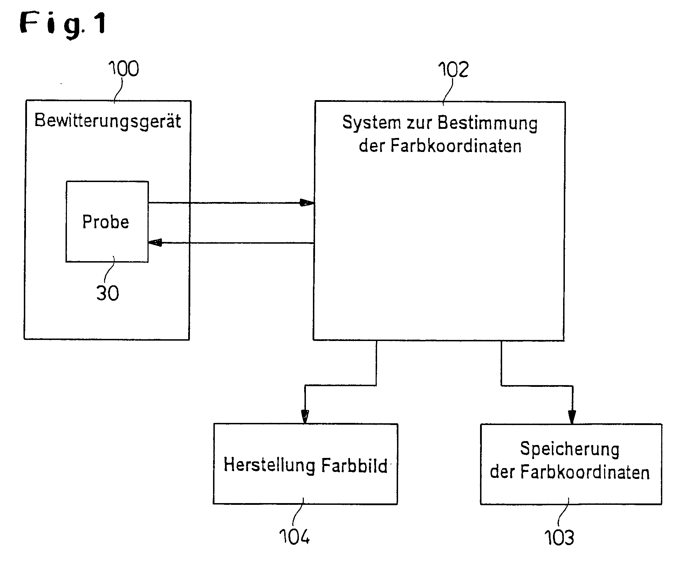

Die Fig. 1 zeigt eine bevorzugte Ausführungsform eines erfindungsgemäßen Bewitterungssystems. Das Bewitterungssystem hat ein Bewitterungsgerät 100. Bei dem Bewitterungsgerät 100 kann es sich um ein beliebiges vorbekanntes Bewitterungsgerät handeln, beispielsweise für die Bewitterung von Kunststoffproben.

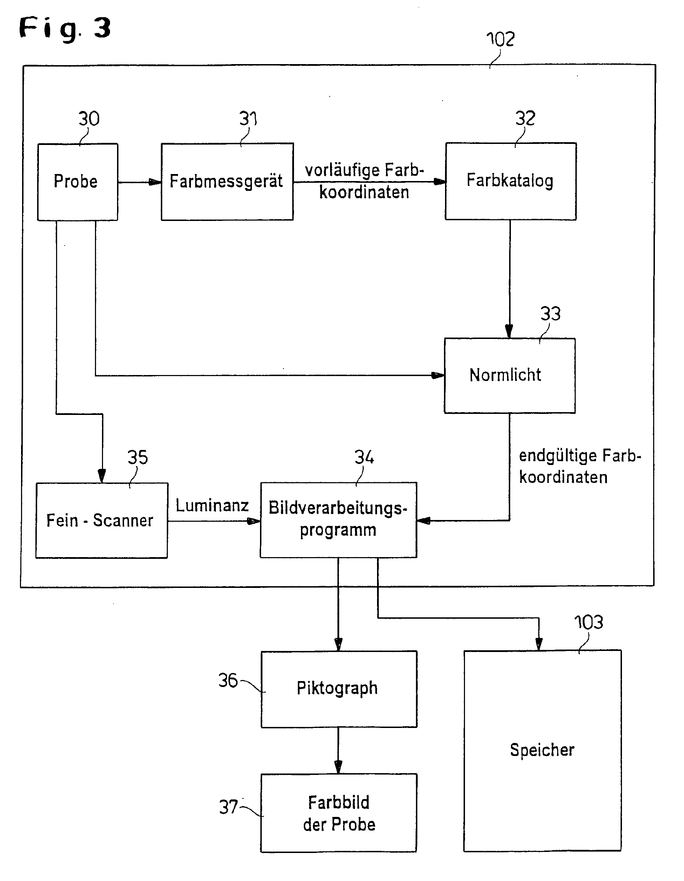

Ferner gehört zu dem Bewitterungssystem ein System 102 zur Bestimmung der Farbkoordinaten einer dem Bewitterungsgerät 100 entnommenen Probe. Das System 102 kann beispielsweise ein Farbmessgerät beinhalten. Vorzugsweise beinhaltet das System 102 darüber hinaus ein Farbkatalogsystem für eine Feinabstimmung der mittels des Farbmessgerätes bestimmten Farbkoordinaten der Probe. Eine entsprechende Ausführungsform wird weiter unten mit Bezug auf die Fig. 3 näher erläutert werden.

An das System 102 ist ein Speicher 103 angeschlossen. In dem Speicher 103 werden die von dem System 102 ermittelten Farbinformationen, also insbesondere die Farbkoordinaten der Probe abgespeichert.

Alternativ oder zusätzlich ist an das System 102 ein bildgebendes Gerät 104 angeschlossen, welches auf der Basis der von dem System 102 gelieferten Bildinformationen, insbesondere basierend auf den Farbkoordinaten, ein Farbbild der Probe herstellt. Dieses kann dann für Dokumentations- und Auswertungszwecke archiviert werden. Bei dem Gerät 104 handelt es sich vorzugsweise um einen Piktographen.

Zum Betrieb des Bewitterungssystems der Fig. 1 wird zunächst eine Probe 30 oder eine Charge von Proben 30 in das Bewitterungsgerät 100 eingebracht. Nach einem bestimmten Zeitintervall wird die Probe 30 dann dem Bewitterungsgerät 100 entnommen, um die Farbkoordinaten der Probe 30 zu diesem Zeitpunkt mittels des Systems 102 zu bestimmen. Die mittels des Systems 102 bestimmten Farbkoordinäten und gegebenenfalls weitere Bildinformationen werden dann im dem Speicher 103 abgelegt und/oder zur Herstellung eines Farbbildes mittels des Gerätes 104 verwendet.

Die Probe 30 wird dann in das Bewitterungsgerät 100 zurückgeführt, so dass die Bewitterung über ein weiteres Zeitintervall erfolgt. Nach Ablauf dieses Zeitintervalls wiederholt sich der genannte Vorgang.

Auf diese Art und Weise steht am Ende des Beobachtungszeitraums für die Bewitterung eine vollständige Dokumentation der bewitterungsbedingten Veränderungen der Probe 30 zur Verfügung und zwar über die gespeicherten Farbkoordinaten und/oder die jeweils nach einem Zeitintervall hergestellten Farbbilder. Auf diese Art und Weise kann ein Bewitterungsversuch beliebiger Zeitdauer mit nur einer Probe 30 bzw. einer Probencharge durchgeführt werden, was im Vergleich zum Stand der Technik eine ganz wesentliche Einsparung von Aufwand bedeutet.

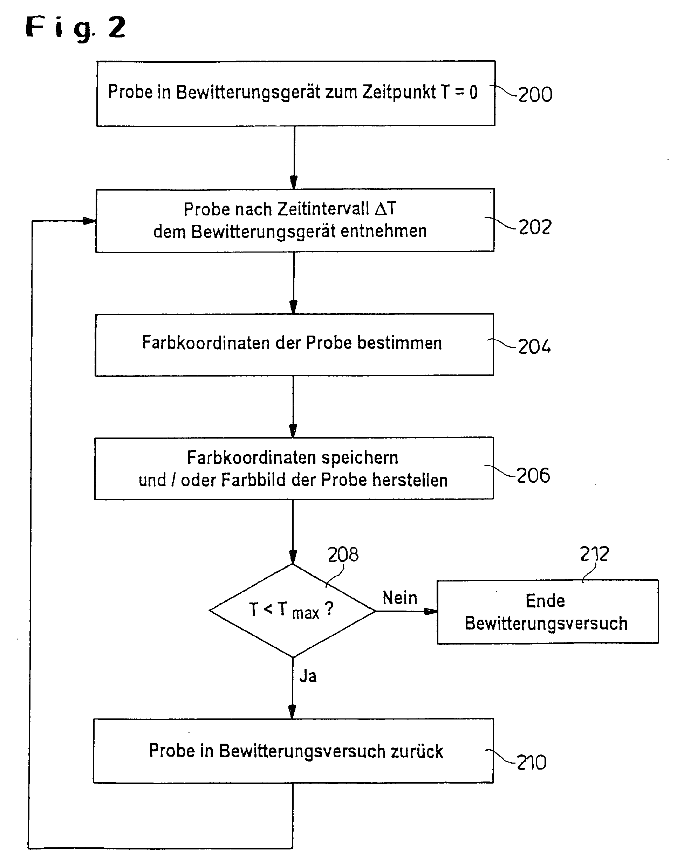

Die Fig. 2 zeigt ein entsprechendes Flussdiagramm. In dem Schritt 200 wird eine Probe oder eine Probencharge einem Bewitterungsgerät zum Zeitpunkt T=0 zugeführt. In dem Schritt 202 wird die Probe bzw. die Probencharge dem Bewitterungsgerät entnommen, nachdem eine Bewitterung während eines Zeitintervalls ΔT stattgefunden hat.

In dem Schritt 204 werden dann die Farbkoordinaten der Probe bzw. der Proben der Probencharge bestimmt. Ergänzend können weitere Oberflächeninformationen der Probe ermittelt werden, beispielsweise hinsichtlich der Textur und des Glanz der Probenoberfläche.

In dem Schritt 206 werden die Farbkoordinaten sowie gegebenenfalls die weiteren Bildinformationen gespeichert. Alternativ oder zusätzlich wird eine Farbbild der Probe hergestellt.

In dem Schritt 208 wird geprüft, ob der bisherige Bewitterungszeitraum T, dass heißt der bisherige gesamte Zeitraum, währenddessen eine Bewitterung der Probe bzw. der Probencharge stattgefunden hat, kleiner als ein vorgegebener Zeitraum Tₘₐₓ ist. Dieser Zeitraum ist gleichbedeutend mit dem Gesamtbeobachtungszeitraum für den zeitlichen Einfluss der Bewitterung auf die Probe bzw. die Probencharge.

Wenn der Gesamtbeobachtungszeitraum noch nicht verstrichen ist, wird die Probe bzw. die Probencharge in dem Schritt 210 in das Bewitterungsgerät zurückgeführt. Daraufhin wiederholen sich die Schritte 202 bis 210 so lange, bis die Prüfung in dem Schritt 208 ergibt, dass das Ende des Gesamtbeobachtungszeitraums erreicht ist. In diesem Fall wird der Bewitterungsversuch in dem Schritt 212 beendet.

Die Fig. 3 zeigt ein Blockdiagramm einer bevorzugten Ausführungsform des Systems 102. Ein Farbmessgerät 31 dient zur Ermittlung der Farbkoordinaten der Probe 30. Mittels der messtechnisch ermittelten vorläufigen Farbkoordinaten der Probe 30 wird dann auf einen Farbkatalog 32 zugegriffen, der die diskreten Farben eines quantisierten Farbraums beinhaltet, wobei auf die einzelnen Farbvorlagen mittels derer Farbkoordinaten in dem Farbkatalog 32 zugegriffen werden kann.

Der Farbkatalog 32 kann beispielsweise aus verschiedenen Seiten bestehen, die jeweils einen zweidimensionalen Ausschnitt aus dem mehrdimensionalen Farbraum wiedergeben. Der Vergleich der so selektierten Farbvorlage mit der Probe 30 folgt dann unter einem Normlicht-Gerät 33. Aus diesem visuellen Vergleich mit der Farbvorlage bzw. weiteren Farbvorlagen mit benachbarten Farbkoordinaten folgen dann die entgültigen Farbkoordinaten der Probe 30. Diese werden in ein Bildverarbeitungsprogramm 34 eingegeben.

Ferner wird mittels eines Fein-Scanners 35 eine Luminanz-Bildinformation erzeugt, die ebenfalls in das Bildverarbeitungsprogramm 34 eingegeben wird. Das Bildverarbeitungsprogramm 34 kombiniert die Luminanz-Bildinformation mit den Farbkoordinaten zu einer resultierenden Bildinformation, die an einen Piktographen 36 ausgegeben wird, um ein Farbbild 37 der Probe herzustellen.

Alternativ oder zusätzlich werden die von dem Bildverarbeitungsprogramm 34 ausgegebenen Daten in einem Speicher 103 für Dokumentationszwecke abgelegt.

Nachdem auf diese Art und Weise das Aussehen der Probe 30 nach einem Zeitintervall der Bewitterung dokumentiert worden ist, wird die Probe 30 dem Bewitterungsgerät (vgl. Bewitterungsgerät 100 der Figur 1) wieder zugeführt, so dass die Bewitterung während eines weiteren Zeitintervalls stattfindet. Danach wird die Probe 30 dem Bewitterungsgerät erneut entnommen, um den Zustand der Probe nach der weiteren Bewitterung zu dokumentieren.

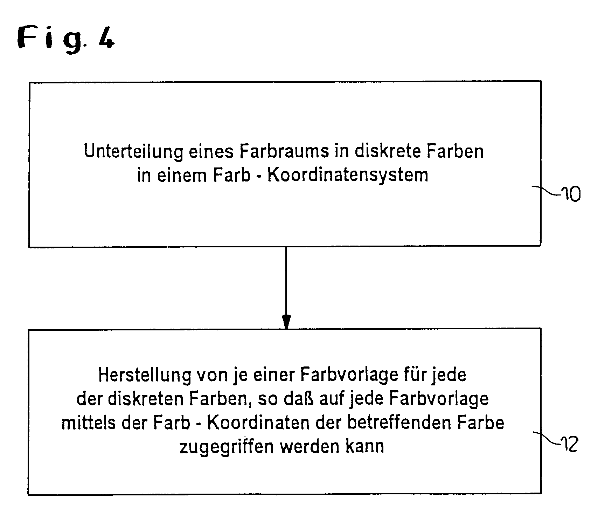

Die Fig. 4 zeigt ein Flussdiagramm zur Herstellung eines erfindungsgemäßen Farbkatalogs. In dem Schritt 10 wird zunächst ein interessierender Farbraum mittels eines Farb-Koordinatensystems in diskrete Farben unterteilt. Dabei kommen verschiedene bekannten Farb-Koordinatensystem in Fragen, so z. B. das RGB, CMY, LCH oder CMYK System oder ein anderes Farb-Koordinatensystem. Weitere Farb-Koordinatensystem sind von der Comission Internationale L' Eclairge definiert worden.

Im Weiteren wird ohne Beschränkung der Allgemeinheit davon ausgegangen, dass für das Farb-Koordinatensystem der Farbvorlagen und des Farbkatalogs das CMYK System verwendet wird.

In dem Schritt 12 wird für jede der diskreten Farben des durch das Farb-Koordinatensystem unterteilten Farbraums eine Farbvorlage hergestellt. Die Anzahl der Farbvorlagen ist dabei durch die Quantisierungsintervalle für die Diskretisierung des Farbraums gegeben. Jede der Farbvorlagen ist durch deren Farbkoordinaten in dem gewählten Farb-Koordinatensystem eindeutig identifiziert. Die Farbkoordinate der Farbvorlage dient als Index oder als Schlüssel für den Zugriff auf die Farbvorlage, wenn die Farbkoordinaten bekannt sind.

Vorzugsweise werden mehrere solcher Farbvorlagen auf einer Katalogseite zusammengefasst, wobei dann eine Katalogseite einen zweidimensionalen Ausschnitt aus dem mehrdimensionalen Farb-Koordinatensystem wiedergibt.

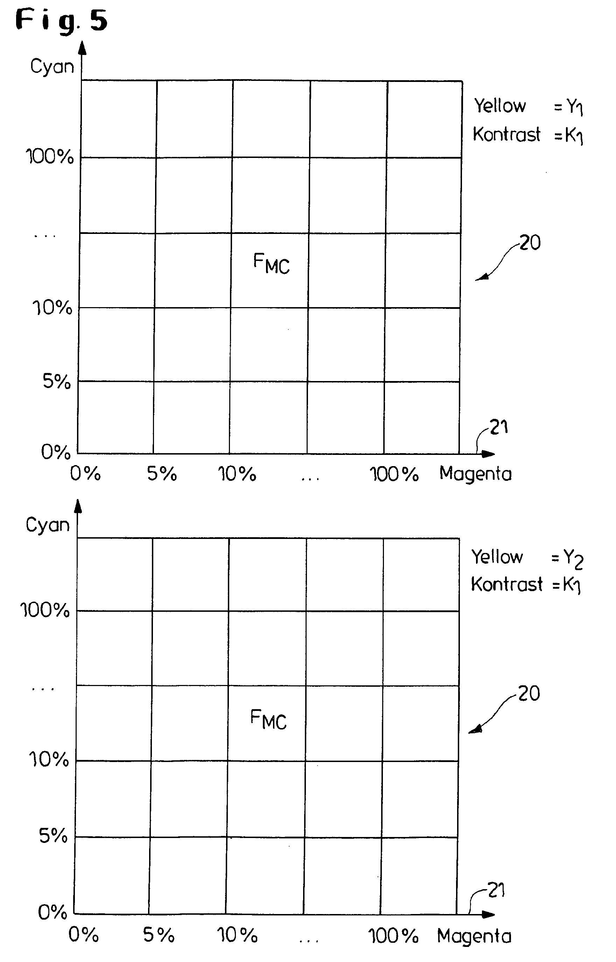

Dies ist mit Bezug auf die Fig. 5 näher erläutert. Die Fig. 5 zeigt eine Seite 20 des Farbkatalogs mit einem Kartesischen Koordinatensystem 21. Die Abzisse des Kartesischen Koordinatensystems 21 gibt den M-Anteil, das heißt, den Magentaanteil in Prozent an und die Ordinate des Kartesischen Koordinatensystems 21 gibt den C-Anteil, das heißt, den Cyananteil ebenfalls in Prozent an. Die Seite 20 stellt einen Ausschnitt aus dem diskreten Farbraum dar, wobei in dem entsprechenden Schnitt durch den Farbraum die Cyan- und Magentaanteile jeweils zwischen Null und Einhundert Prozent variieren und die Y, das heißt Yellow, und die K, das heißt die Kontrast-Anteile konstant sind. In dem betrachteten Beispiel hat der Anteil Y den Wert Y₁ und der Anteil K hat den Wert K₁ für alle Farben dieses Ausschnitts aus dem diskreten Farbraum.

Die Quantisierung des Farbraums ist in dem gezeigten Ausführungsbeispiel in fünf Prozent-Schritten vorgenommen worden, wobei auch kleinere oder größere Schritte je nach der Genauigkeitsanforderung gewählt werden können.

Die Seite 20 zeigt also eine Matrix von Farbvorlagen, in der jede der Farbvorlagen dieselbe Y-Komponente Y₁ und dieselbe Kontrast-Komponente K₁ aufweist und nur die Magenta- und Cyan-Anteile variieren. Dadurch entstehen verschiedene Farbvorlagen F_{MC}, die jeweils eine homogene diskrete Farbe mit einem bestimmten Prozentanteil Magenta und einem bestimmten Prozentanteil Cyan sowie den für die Seite 20 konstanten Anteilen Y₁ und K₁ aufweisen. Auf eine bestimmte Farbvorlage lässt sich also mittels deren CMYK Farbkoordinaten in dem Katalog zugreifen, indem die Katalogseite 20 mit den betreffenden Yellow und Kontrast Koordinaten gewählt wird und auf dieser Katalogseite 20 dann die Farbvorlage mit den zutreffenden Magenta- und Cyan-Anteilen.

Die Fig. 5 zeigt eine weitere Seite 20 des Farbkatalogs, die einen anderen Ausschnitt aus dem diskreten Farbraum gibt, nämlich für die Yellow-Anteile Y₂ und Kontrast-Anteile K₁.

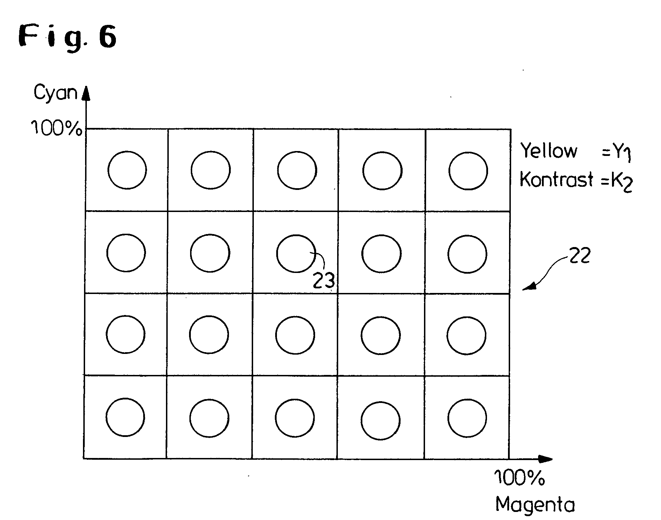

Die Fig. 6 zeigt eine entsprechende Seite 22 eines solchen Farbkatalogs. In der Ausführungsform der Fig. 3 hat jede Farbvorlage der Seite 22 ein Loch 23 in einem mittleren Bereich. Ein Loch 23 dient für den bequemen Vergleich der Farbe der Farbvorlage mit der Farbe einer Oberfläche der Probe, deren exakte Farbkoordinaten zu bestimmten sind. Für einen solchen visuellen Vergleich wird die Probe unter die Farbvorlage gebracht und durch das Loch in der Farbvorlage hindurch betrachtet.

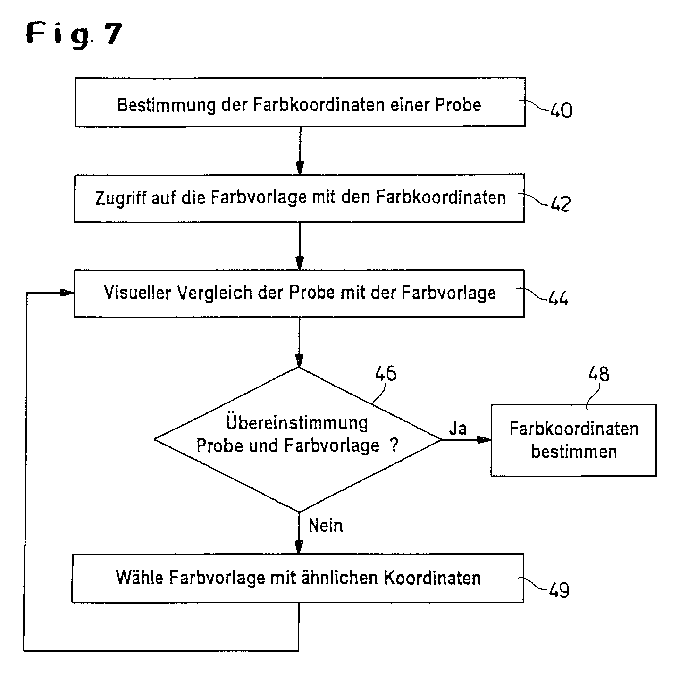

Die Fig. 7 zeigt ein Flussdiagramm eines Verfahrens zur Bestimmung, der Farbkoordinaten.

In dem Schritt 40 werden zunächst die Farbkoordinaten der Probe durch Messung mit einer Farbmessvorrichtung ermittelt. Mit diesen Farbkoordinaten erfolgt dann in dem Schritt 42 ein Zugriff auf die entsprechende Farbvorlage. Diese wird in dem Schritt 44 mit der Probe visuell verglichen. Vorzugsweise erfolgt dieser Vergleich unter Normbedingungen, das heißt, unter Normlicht.

In dem Schritt 46 entscheidet der Benutzer, ob die Probe mit der Farbvorlage übereinstimmt. Wenn dies aufgrund des visuellen Vergleichs der Fall ist, sind die Farbkoordinaten der Farbvorlage zugleich die Farbkoordinaten der Probe und die Farbe der Probe ist somit bestimmt.

Ist das Gegenteil der Fall, so wird in dem Schritt 49 eine andere Farbvorlage von dem Benutzer gewählt, die ähnliche Farbkoordinaten aufweist. Dabei kann es sich z.B. um eine oder mehrere Farbvorlagen derselben Seite (vgl. Seite 20 oder Seite 22 der Figuren 5 bzw. 6) handeln, die zu der Farbvorlage mit den messtechnisch bestimmten Farbkoordinaten benachbart sind. Es kann sich jedoch auch um Farbvorlagen benachbarter Koordinaten auf verschiedenen Katalogseiten handeln.

Eine solche in dem Schritt 49 gewählte Farbvorlage wird dann wiederum in dem Schritt 44 visuell mit der Probe verglichen. Dieser Vorgang wird solange wiederholt, bis die Farbvorlage mit der besten farblichen Übereinstimmung mit der Probe durch den Benutzer gefunden worden ist.

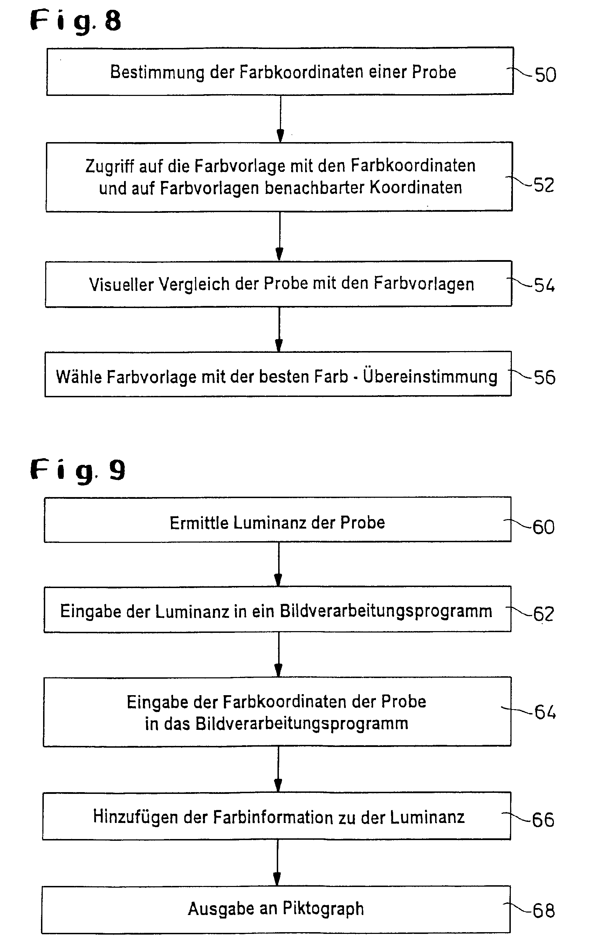

Die Fig. 8 zeigt eine alternative Ausführungsform des Verfahrens der Fig. 7, bei dem in dem Schritt 50 zunächst wieder die Farbkoordinaten der Probe messtechnisch bestimmt werden. In dem Schritt 52 erfolgt dann ein Zugriff auf die Farbvorlage in dem Farbkatalog mit diesen Farbkoordinaten sowie auf weitere Farbvorlagen mit hierzu benachbarten Farbkoordinaten. Hierbei handelt es sich vorzugsweise um Farbvorlagen derselben Katalogseite.

Diese Farbvorlagen werden in dem Schritt 54 visuell mit der Probe verglichen, um die Farbvorlage mit der besten farblichen Übereinstimmung zu ermitteln (Schritt 56).

Die Fig. 9 veranschaulicht ein entsprechendes Verfahren zur Herstellung eines digitalen Farbbildes. In dem Schritt 60 wird eine Luminanz der Probe ermittelt, vorzugsweise mittels eines Fein-Scanners, der ein LCH Signal abgibt. Die Luminanz ergibt sich in diesem Fall aus der L-Komponente des von dem Fein-Scanner abgegebenen Signals.

Diese Luminanz-Information wird in dem Schritt 62 in ein Bildverarbeitungsprogramm eingegeben. Man erhält auf diese Art und Weise eine schwarz-weiß Abbildung der Probe, die Textur- und/oder Glanzinformationen beinhaltet. In dem Schritt 64 werden die zuvor bestimmten Farbkoordinaten der Probe ebenfalls in das Bildverarbeitungsprogramm eingegeben und in dem Schritt 66 mit der Luminanz-Bildinformation zu einer resultierenden Bildinformation kombiniert. Das so in dem Schritt 66 digital erzeugte Bild wird dann in dem Schritt 68 auf einer entsprechenden Vorrichtung ausgegeben, die den Genauigkeitsanforderungen genüge trägt. Hierzu kann beispielsweise ein Piktograph verwendet werden.

### Bezugszeichenliste

- Schritt: 10
- Schritt: 12
- Seite: 20
- Kartesisches Koordinatensystem: 21
- Seite: 22
- Loch: 23
- Probe: 30
- Farbmessgerät: 31
- Farbkatalog: 32
- Normlicht-Gerät: 33
- Bildverarbeitungsprogramm: 34
- Fein-Scanner: 35
- Piktograph: 36
- Farbbild: 37
- Schritt: 40
- Schritt: 42
- Schritt: 44
- Schritt: 46
- Schritt: 48
- Schritt: 49
- Schritt: 50
- Schritt: 52
- Schritt: 54
- Schritt: 56
- Schritt: 60
- Schritt: 62
- Schritt: 64
- Schritt: 66
- Schritt: 68
- Bewitterungsgerät: 100
- System: 102
- Speicher: 103
- Gerät: 104
- Schritt: 200
- Schritt: 202
- Schritt: 204
- Schritt: 206
- Schritt: 208
- Schritt: 210
- Schritt: 212

## Patentansprüche

1. Verfahren zur Bewitterung einer Probe über einen Zeitraum mit folgenden Schritten:
a. Bewitterung der Probe über ein erstes Zeitintervall,
b. Bestimmung der Farbkoordinaten der Probe nach dem ersten Zeitintervall,
c. Wiederholung der Schritte a. und b. für aufeinanderfolgende Zeitintervalle bis zum Ende des Zeitraums.

2. Verfahren nach Anspruch 1 mit folgenden weiteren Schritten:
- Messung der Farbkoordinaten,
- Zugriff auf zumindest eine Farbvorlagen mittels der Farbkoordinaten,
- Vergleich der Farbvorlage mit der Probe zur Verifizierung der Farbkoordinaten.

3. Verfahren nach Anspruch 1 mit folgenden weiteren Schritten:
- Messung der Farbkoordinaten,
- Zugriff auf eine Farbvorlage mittels der Farbkoordinaten und auf weitere Farbvorlagen mit benachbarten Farbkoordinaten,
- Vergleich der Farbvorlage und der weiteren Farbvorlagen mit der Probe zur Bestimmung der Farbvorlage mit der am besten mit der Probe übereinstimmenden Farbe.

4. Verfahren nach Anspruch 2 oder 3, bei dem der Vergleich visuell durchgeführt wird.

5. Verfahren nach einem der vorhergehenden Ansprüche 2 bis 4, bei dem der Vergleich unter Normlicht durchgeführt wird.

6. Verfahren nach einem der vorhergehenden Ansprüche 1 bis 5, bei dem die Farbvorlage oder die Farbvorlagen in einem mittleren Bereich ein Loch aufweisen und ein Oberflächenbereich der Probe zum Vergleich mit der betreffenden Farbvorlage durch das Loch betrachtet wird.

7. Verfahren nach einem der vorhergehenden Ansprüche 1 bis 6, bei dem die Farbvorlagen in einem Katalogsystem abgelegt sind und das Katalogsystem mittels der Farbkoordinaten der Farbvorlagen indexiert ist, und auf eine Farbvorlage in dem Katalogsystem mittels deren Farbkoordinate zugegriffen wird.

8. Verfahren nach Anspruch 7, bei dem jede Seite des Katalogsystems einen zweidimensionalen Ausschnitt aus einem diskreten Farbraum beinhaltet.

9. Verfahren nach einem der vorhergehenden Ansprüche 1 bis 8, wobei ein dreidimensionaler diskreter Farbraum verwendet wird.

10. Verfahren nach einem der vorhergehenden Ansprüche 1 bis 8, bei dem ein vierdimensionaler diskreter Farbraum verwendet wird.

11. Verfahren nach einem der vorhergehenden Ansprüche 1 bis 10, wobei zunächst dreidimensionale Farbkoordinaten der Probe gemessen werden und die dreidimensionalen Farbkoordinaten in vierdimensionale Farbkoordinaten transformiert werden, um mittels der vierdimensionalen Farbkoordinaten auf die Farbvorlage bzw. die Farbvorlagen zuzugreifen.

12. Verfahren nach einem der vorhergehenden Ansprüche 1 bis 11 mit folgenden weiteren Schritten:
- Eingabe der Farbkoordinaten in Mittel zur Herstellung eines Farbbildes der Probe nach jedem Zeitintervall,
- Herstellung eines Farbbildes für jedes Zeitintervall.

13. Verfahren nach Anspruch 12 mit folgenden weiteren Schritten:
- Ermittlung einer Luminanz-Bildinformation der Probe,
- Verknüpfung der Luminanz-Bildinformation mit den Farbkoordinaten zu einer resultierenden Bildinformation,
- Eingabe der resultierenden Bildinformation in die Mittel zur Herstellung eines Farbbildes.

14. Verfahren nach Anspruch 13, wobei die Luminanz-Bildinformation durch Aufnahme eines schwarz-weiß Bildes der Probe gewonnen wird.

15. Verfahren nach Anspruch 13 oder 14, bei dem die Luminanz-Bildinformation durch fein-scannen der Probe gewonnen wird.

16. Verfahren nach einem der Ansprüche 13, 14 oder 15, bei dem die Luminanz-Bildinformation aus der L-Komponente eines LCH Signals ermittelt wird.

17. Verfahren nach einem der vorhergehenden Ansprüche 12 bis 16, wobei ein Piktograph als Mittel zur Herstellung eines Farbbildes verwendet wird.

18. Verfahren nach einem der vorhergehenden Ansprüche 1 bis 17, wobei die Farbkoordinaten und/oder die Luminanz-Bildinformation und/oder die resultierende Bildinformation nach jedem Zeitintervall abgespeichert werden.

19. Bewitterungssystem zur Bewitterung einer Probe über einen Zeitraum mit:
- Mitteln (100) zur Bewitterung der Probe über eine Anzahl von Zeitintervallen des Zeitraums,
- Mitteln (102) zur Bestimmung der Farbkoordinaten der Probe, jeweils nach einem Zeitintervall,
- Mitteln (103) zur Speicherung der Farbkoordinaten und/oder Mitteln zur Herstellung eines Farbbildes der Probe nach jedem Zeitintervall.

20. Bewitterungssystem nach Anspruch 19, wobei die Mittel zur Bestimmung der Farbkoordinaten einen Farbkatalog eines n-dimensionalen Farbraums aufweisen, vorzugsweise eines 3- oder 4-dimensionalen Farbraums, mit einer Farbvorlage für jede Farbkoordinate des Farbraums und einem Index, so dass auf jede der Farbvorlagen mittels der betreffenden Farbkoordinaten zugegriffen werden kann.

21. Bewitterungssystem nach Anspruch 20, bei dem jede der Farbvorlagen in einem mittleren Bereich ein Loch aufweist.

22. Bewitterungssystem nach Anspruch 20 oder 21, bei dem jede Katalogseite einen zweidimensionalen Ausschnitt des n-dimensionalen Farbraums beinhaltet.

23. Bewitterungssystem nach einem der vorhergehenden Ansprüche 19 bis 22, wobei die Mittel zur Bestimmung der Farbkoordinaten ein Farbmessgerät (31) zur Ermittlung von vorläufigen Farbkoordinaten der Probe aufweisen, sowie einen Farbkatalog zur Verifizierung der vorläufigen Farbkoordinaten durch Vergleich der entsprechenden Farbvorlage des Farbkatalogs (32) mit der Probe.

24. Bewitterungssystem nach einem der vorhergehenden Ansprüche 19 bis 23, bei dem die Mittel zur Bestimmung der Farbkoordinatenmittel (33) zur Bereitstellung von Normlicht für den Vergleich der Farbvorlage oder der Farbvorlagen mit der Probe unter Norm-Bedingungen aufweisen.

25. Bewitterungssystem nach einem der vorhergehenden Ansprüche 19 bis 24, bei dem das Farbmessgerät zur Bestimmung dreidimensionaler Farbkoordinaten ausgebildet ist und mit Mitteln zur Transformation der dreidimensionalen Farbkoordinaten in die vierdimensionalen Farbkoordinaten des vierdimensionalen Farbraums des Farbkatalogs.

26. Bewitterungssystem nach einem der vorhergehenden Ansprüche 19 bis 25 mit Mitteln (35) zur Ermittlung einer Luminanz-Bildinformation der Probe und mit Mitteln (34) zur Verknüpfung der Luminanz-Bildinformation mit den Farbkoordinaten zu einer resultierenden Bildinformation, wobei die Mittel zur Herstellung des Farbbildes zur Eingabe der resultierenden Bildinformation ausgestaltet sind.

27. Bewitterungssystem nach Anspruch 26, bei dem es sich bei der Luminanz-Bildinformation um ein schwarz-weiß Bild handelt.

28. Bewitterungssystem nach einem der vorhergehenden Ansprüche 26 oder 27, bei dem die Mittel zur Bestimmung der Luminanz-Bildinformation als ein Fein-Scanner ausgebildet sind.

29. Bewitterungssystem nach Anspruch 28, bei dem der Fein-Scanner zur Erzeugung eines LCH Farbsignals ausgebildet ist und die Luminanz-Bildinformation durch Weglassen der C und H Komponenten des LCH Signals bestimmbar ist.

30. Bewitterungssystem nach einem der vorhergehenden Ansprüche 19 bis 29, bei dem die Mittel zur Herstellung des Farbbildes als Piktograph ausgebildet sind.
